(19) **Europäisches Patentamt / European Patent Office / Office européen des brevets**

(11) **EP 4 614 766 A1**

(12) **EUROPEAN PATENT APPLICATION**
published in accordance with Art. 153(4) EPC

(43) Date of publication:
**10.09.2025 Bulletin 2025/37**

(21) Application number: **22964469.5**

(22) Date of filing: **04.11.2022**

(51) International Patent Classification (IPC):
$H02K\ 1/274^{(2022.01)}$    $H02K\ 15/02^{(2025.01)}$

(52) Cooperative Patent Classification (CPC):
**H02K 1/276; H02K 1/274; H02K 1/2766;
H02K 7/083; H02K 15/02; H02K 15/03;**
H02K 2213/03

(86) International application number:
**PCT/JP2022/041177**

(87) International publication number:
**WO 2024/095452 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kabushiki Kaisha Toshiba
Minato-ku
Tokyo (JP)**

(72) Inventor: **MORI, Daisuke
Kawasaki-shi, Kanagawa 212-8585 (JP)**

(74) Representative: **AWA Sweden AB
Box 5117
200 71 Malmö (SE)**

(54) **TWO-LAYER MAGNET-EMBEDDED ROTOR, TWO-LAYER MAGNET-EMBEDDED ROTARY ELECTRIC MACHINE, AND METHOD FOR MANUFACTURING TWO-LAYER MAGNET-EMBEDDED ROTOR**

(57) According to embodiments, a double-layer interior permanent-magnet rotor (100) includes: a rotor shaft (110); a rotor core (120) including first and second outer side accommodation holes (121, 122) and first and second inner side accommodation holes (124, 125); first and second outer side magnets (131, 132); and first and second inner side magnets (133, 134). The first inner side accommodation hole (124) and the second inner side accommodation hole (125) communicate with the outer side of the outer circumference. A value of an inner-side open angle $\Theta b1$ at which radially outer side walls (124a) and (125a) of the inner side accommodation holes open toward a radially outer side is from a prescribed value to a value of an outer-side open angle $\Theta a$ at which radially outer side walls (121a, 122a) of the outer side accommodation holes open toward the radially outer side.

FIG. 2

**Description**

FIELD

Embodiments of the present invention relate to a double-layer interior permanent-magnet rotor, a double-layer interior permanent-magnet rotary electric machine, and a method for manufacturing the double-layer interior permanent-magnet rotor.

BACKGROUND

To reduce a leakage flux in IPM (Interior Permanent Magnet) rotary electric machine whose permanent magnets are embedded in a rotor, a shape opening toward an outer side of a rotor core without any bridges on the outer circumferential side being connected has been proposed.

PRIOR ART DOCUMENT

PATENT DOCUMENT

Patent Document 1: Japanese Laid-open Patent Publication No. 2020-014322

SUMMARY OF THE INVENTION

PROBLEMS TO BE SOLVED BY THE INVENTION

In a configuration where two layers each composed of two magnets arranged in the circumferential direction to make a pair are arranged in a radial direction in each pole of a rotor. If bridges on the outer circumferential side of the two layers are open, centrifugal stress generated by high-speed rotation exceeds mechanical strength of a core part between the layers to be likely to cause deformation, which will be a cause of a fracture. Here, there are many cases where the two magnets making a pair are arranged symmetrically with respect to a d-axis which is the center of the relevant magnetic pole (V-arrangement).

To reduce the deformation, it is necessary to make the magnets in the layers distant from each other and make the bridges at the circumferential middle direction thicker. A conceivable example of this is to make an open angle of the magnets making a pair in the second layer small and acute. This method, however, causes inner ends of the magnets in the second layer to be located more inward in the radial direction. As a result, it is not possible to cut out the core on the radially inner side whose influence on torque characteristics is small, making it difficult to lighten the rotor.

Further, if outer bridges in the two layers are cut to be hollowed in the rotor where the two layers each composed of the pair of magnets are arranged, centrifugal stress generated in the rotor exceeds a strength criterion value in some parts. To make the centrifugal stress equal to or lower than the criterion value, there may be a shape where the angle at which the two magnets making a pair in the second layer open toward the radially outer side (radially outer side) is made small, but making the open angle in the second layer too small decreases a torque in a medium-speed to high-speed range.

An object of the present invention is to provide a double-layer interior permanent-magnet rotor and a double-layer interior permanent-magnet rotary electric machine that can keep both torque performance and strength in a configuration where two layers each composed of two magnets making a pair are arranged in each magnetic pole.

MEANS FOR SOLVING THE PROBLEMS

To attain the above object, a double-layer interior permanent-magnet rotor according to an embodiment of the present invention includes: a rotor shaft extending in a rotation axis direction; a rotor core attached to the rotor shaft and having magnetic poles each of which has a first outer side accommodation hole and a second outer side accommodation hole which are formed to make a pair on a radially outer side, and has a first inner side accommodation hole and a second inner side accommodation hole which are formed to make a pair on more radially inner sides (more radially inner sides) than the first outer side accommodation hole and the second outer side accommodation hole; and a first outer side magnet and a second outer side magnet which are accommodated in the first outer side accommodation hole and the second outer side accommodation hole respectively; and a first inner side magnet and a second inner side magnet which are accommodated in the first inner side accommodation hole and the second inner side accommodation hole respectively, wherein the first outer side accommodation hole and the second outer side accommodation hole do not communicate with an outer side of an outer circumference of the rotor core, wherein the first inner side accommodation hole and the second inner side accommodation hole communicate with the outer side of the outer circumference of the rotor core, and wherein a value of an inner-side open angle at which a first inner side accommodation hole radially outer side wall of the first inner side accommodation hole and a second inner side accommodation hole radially outer side wall of the second inner side accommodation hole open toward a radially outer side is equal to or higher than a prescribed value and is equal to or lower than a value of an outer-side open angle at which a first outer side accommodation hole radially outer side wall of the first outer side accommodation hole and a second outer side accommodation hole radially outer side wall of the second outer side accommodation hole open toward the radially outer side.

BRIEF DESCRIPTION OF THE DRAWINGS

Fig. 1 is a sectional longitudinal view illustrating a configuration example of a double-layer interior permanent-magnet rotary electric machine according to an embodiment

Fig. 2 is a partial transverse sectional view illustrating a configuration example of a double-layer interior permanent-magnet rotor according to the embodiment

Fig. 3 is a flowchart illustrating a procedure of a method for manufacturing the double-layer interior permanent-magnet rotor according to the embodiment

Fig. 4 is a partial transverse sectional view illustrating an example serving as a base for comparison with the double-layer interior permanent-magnet rotor according to the embodiment

Fig. 5 is a partial transverse sectional view illustrating the double-layer interior permanent-magnet rotor according to the embodiment

Fig. 6 is a graph illustrating torque and stress in a case of two-layer cut as a comparative example for explaining an effect of the double-layer interior permanent-magnet rotor according to the embodiment

Fig. 7 is a graph illustrating torque and stress in a case of one-layer cut according to the embodiment for explaining the effect of the double-layer interior permanent-magnet rotor according to the embodiment

Fig. 8 is a first graph illustrating an influence of an angle difference between open angles on generated stress in the double-layer interior permanent-magnet rotor according to the embodiment

Fig. 9 is a second graph illustrating an influence of the angle difference between the open angles on generated stress in the double-layer interior permanent-magnet rotor according to the embodiment

Fig. 10 is a third graph illustrating an influence of the angle difference between the open angles on generated stress in the double-layer interior permanent-magnet rotor according to the embodiment

Fig. 11 is a fourth graph illustrating an influence of the angle difference between the open angles on generated stress in the double-layer interior permanent-magnet rotor according to the embodiment

Fig. 12 is a fifth graph illustrating an influence of the angle difference between the open angles on generated stress in the double-layer interior permanent-magnet rotor according to the embodiment

Fig. 13 is a graph illustrating a tendency regarding the open angles and the angle difference in the double-layer interior permanent-magnet rotor according to the embodiment

Fig. 14 is a graph illustrating an effective range of an inner-side open angle for an outer-side open angle in the double-layer interior permanent-magnet rotor according to the embodiment

## DETAILED DESCRIPTION

Hereinafter, a double-layer interior permanent-magnet rotor, a double-layer interior permanent-magnet rotary electric machine, and a method for manufacturing the double-layer interior permanent-magnet rotor will be described with reference to the drawings. Here, identical or similar parts are denoted by a common reference sign, and a redundant description thereof will be omitted.

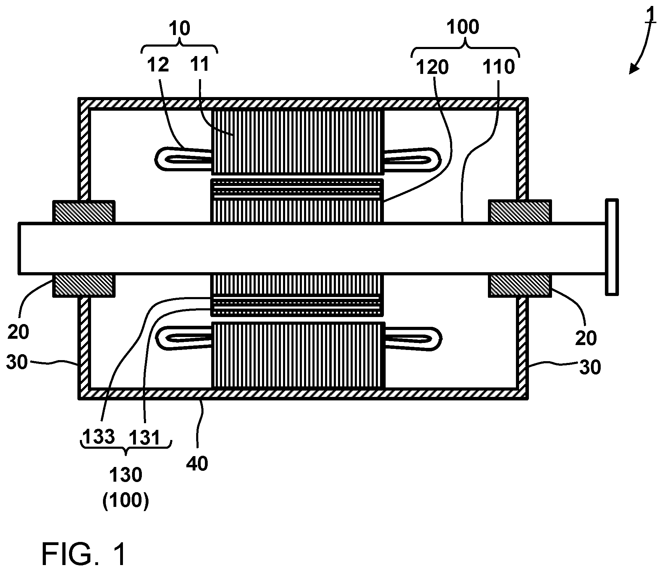

Fig. 1 is a sectional longitudinal view illustrating a configuration example of a double-layer interior permanent-magnet rotary electric machine 1 according to an embodiment.

The double-layer interior permanent-magnet rotary electric machine 1 includes a double-layer interior permanent-magnet rotor 100, a stator 10, two bearings 20, two bearing brackets 30, and a frame 40.

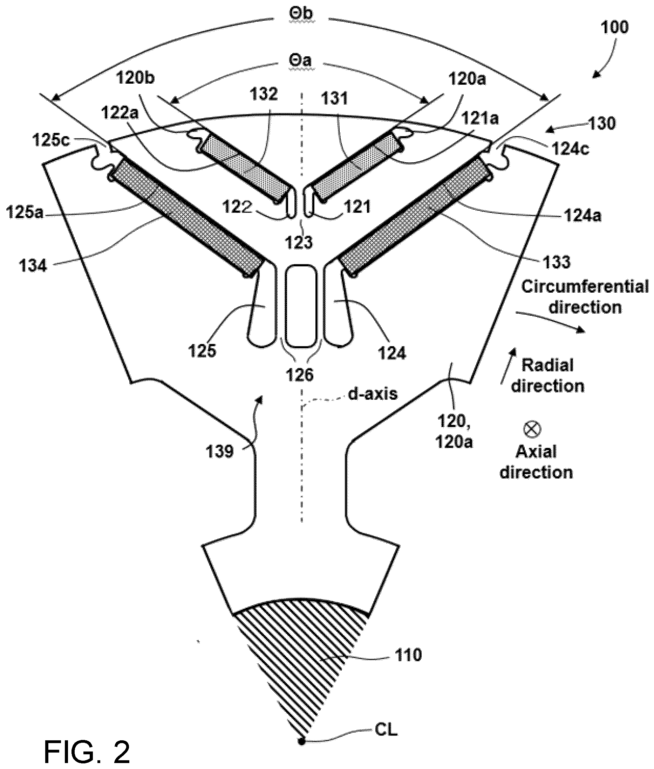

The double-layer interior permanent-magnet rotor 100 has a rotor shaft 110 extending in a direction of a rotation axis, a rotor core 120 attached to a radially outer side of the rotor shaft 110, and permanent magnets 130 embedded in the rotor core 120. In Fig. 1, first outer side magnets 131 and first inner side magnets 133 out of the permanent magnets 130 are illustrated, but details will be described later with reference to Fig. 2.

The stator 10 has a stator core 11 in a cylindrical shape arranged on a radially outer side of the rotor core 120 and a stator winding 12 wound around the stator core 11.

The two bearings 20 support the rotor shaft 110 in a rotatable manner. The two bearing brackets 30 support the two bearings 20 respectively in a stationary manner. The frame 40 is cylindrical, accommodates the stator 10, and has two ends connected to the two bearing brackets 30 respectively to support these.

Fig. 2 is a partial transverse sectional view illustrating a configuration example of the double-layer interior permanent-magnet rotor 100 according to the embodiment. The double-layer interior permanent-magnet rotor 100 has an even number of magnetic poles 139. Magnetic poles opposite in polarity, that is, the magnetic poles 139 where directions of magnetic lines of force are opposite are arranged alternately to be adjacent to each other in the circumferential direction. Fig. 2 illustrates one of the magnetic poles 139.

Here, for convenience of the description, direction is defined. A direction parallel to a direction in which an axial center CL of the rotor shaft 110 extends, that is, a direction vertical to Fig. 2 (front-rear direction of the drawing in Fig. 2) is referred to as an axial direction. A direction away from the axial center CL of the rotor shaft 110 is referred to as a radial direction. Further, a direction in which the double-layer interior permanent-magnet rotor 10 rotates is referred to as a circumferential direction.

The double-layer interior permanent-magnet rotor 100 according to this embodiment has, in each of the magnetic poles 139, a first outer side magnet 131, a second outer side magnet 132, a first inner side magnet 133, and a second inner side magnet 134.

The first outer side magnet 131 and the second outer side magnet 132 which form a first layer are arranged side by side at an interval in the circumferential direction and are at positions opposed to each other with respect to the circumferential-direction middle. Further, the first inner side magnet 133 and the second inner side magnet 134 which form a second layer are similarly arranged side by side at an interval in the circumferential direction and are at positions opposed to each other with respect to the circumferential-direction middle. The first inner side magnet 133 and the second inner side magnet 134 forming the second layer are arranged respectively on radially inner sides of the first outer side magnet 131 and the second outer side magnet 132 forming the first layer.

It should be noted that, though Fig. 2 illustrates, as an example, a case where the first outer side magnet 131 and the second outer side magnet 132 are symmetrical with each other and the first inner side magnet 133 and the second inner side magnet 134 are symmetrical with each other, with respect to a center axis (d-axis) of the magnetic pole 139 in the cross section vertical to the axial direction, that is, it illustrates a case of what is called V-arrangement, but the arrangement is not limited to this. That is, the first outer side magnet 131 and the second outer side magnet 132 may be different in size and may be asymmetrical in direction. Similarly, the first inner side magnet 133 and the second inner side magnet 134 may be different in size and may be asymmetrical in direction.

In the rotor core 120, a plurality of accommodation holes are formed. Specifically, a first outer side accommodation hole 121, a second outer side accommodation hole 122, a first inner side accommodation hole 124, and a second inner side accommodation holes 125 where to accommodate the first outer side magnet 131 and the second outer side magnet 132 of the first layer and the first inner side magnet 133 and the second inner side magnet 134 of the second layer respectively are formed. The first outer side accommodation hole 121, the second outer side accommodation hole 122, the first inner side accommodation hole 124, and the second inner side accommodation hole 125 are regions with high magnetic reluctance and function as flux barriers.

The rotor core 120 has a plurality of electromagnetic steel sheets 120a laminated in the axial direction. As for the shapes and so on of the accommodation holes formed in the rotor core 120 and those of the rotor core 120, after the electromagnetic steel sheets 120a are laminated, their cross sections have shapes corresponding to those in the electromagnetic steel sheets 120a.

Radially inner sides of the first outer side accommodation hole 121 and the second outer side accommodation holes 122 are adjacent to each other with one outer side center bridge 123 therebetween. Further, neither of radially outer parts of the first outer side accommodation hole 121 and the second outer side accommodation hole 122 communicates with the radially outer side of the rotor core 120, and their outer bridges are present.

Radially inner sides of the first inner side accommodation hole 124 and the second inner side accommodation hole 125 are adjacent to each other with two inner side center bridges 126 therebetween. Further, radially outer parts of the first inner side accommodation hole 124 and the second inner side accommodation hole 125 communicate with the radially outer side of the rotor core 120, that is, their outer bridges are not present.

Here, an angle made by a first outer side accommodation hole radially outer side wall 121a of the first outer side accommodation hole 121 and a second outer side accommodation hole radially outer side wall 122a of the second outer side accommodation hole 122, that is, an angle at which they open toward the radially outer side is referred to as an outer-side open angle $\Theta a$. Similarly, an angle made by a first inner side accommodation hole radially outer side wall 124a of the first inner side accommodation hole 124 and a second inner side accommodation hole radially outer side wall 125a of the second inner side accommodation hole 125, that is, an angle at which they open toward the radially outer side is referred to as an inner-side open angle $\Theta b$.

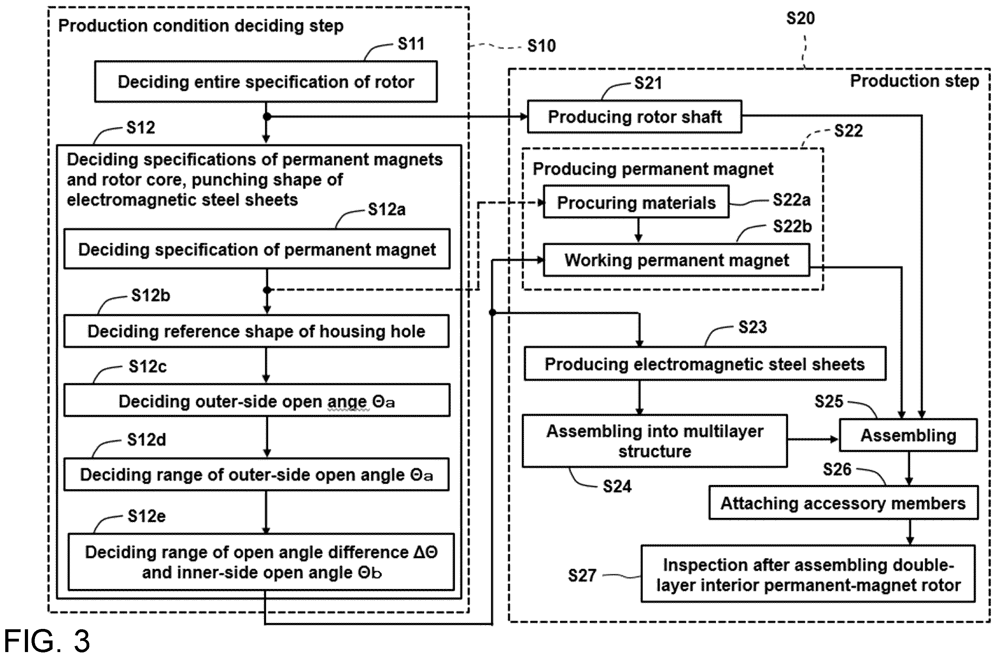

Fig. 3 is a flowchart illustrating a procedure of a method for manufacturing the double-layer interior permanent-magnet rotor 100 according to the embodiment.

The method for manufacturing the double-layer interior permanent-magnet rotor 100 includes a production condition deciding step S10 and a production step S20.

First, the production condition deciding step S10 will be described. As the production condition deciding step S10, the entire specifications of the double-layer interior permanent-magnet rotor 100 are first decided (step S11). At this stage, the shape and dimension of the rotor shaft 110, the connection shapes and dimensions of the rotor core 120 and so on attached to the rotor shaft 110 with the rotor shaft 110 are decided.

Next, the specifications of the permanent magnets 130 and the rotor core 120 are decided (step S12). A detailed procedure of the step S12 is as follows.

First, the specifications of the permanent magnets 130 are decided (step S12a). Specifically, the specifications such as the materials, shapes, and dimensions of the first outer side magnet 131 and the second outer side magnet 132 which are arranged in the outer side layer and the first inner side magnet 133 and the second inner side magnet 134 which are arranged in the inner side layer are decided.

Next, based on the permanent magnets 130 having the decided shapes and dimensions, the shapes of the accommodation holes are decided according to a conventional method (step S12b). Specifically, based on the shapes and dimensions of the permanent magnets 130, the shapes and dimensions of the accommodation holes, that is, the first outer side accommodation hole 121, the second outer side accommodation hole 122, the first inner side accommodation hole 124, and the second inner side accommodation hole 125 are decided.

Next, a reference value of the outer-side open angle Θa is decided (step S12c). Specifically, a value of the outer-side open angle Θa which is the angle made by the first outer side accommodation hole radially outer side wall 121a of the first outer side accommodation hole 121 and the second outer side accommodation hole radially outer side wall 122a of the second outer side accommodation hole 122 is decided as the reference value. Here, if the first outer side accommodation hole 121 and the second outer side accommodation hole 122 are in the same shape, they are arranged symmetrically with respect to the center axis (d-axis) of the relevant magnetic pole 139. Hereinafter, this is defined as a reference shape.

Next, a range of the outer-side open angle Θa is decided (step S12d). The range of the value of the outer-side open angle Θa is set to a range including the reference value of the outer-side open angle Θa. Note that the range is preferably set to a range considered feasible or a range desired to be implemented, but the range may be set wider so that a tendency including that in the outside of that range can be captured.

Next, ranges of an open angle difference ΔΘ and the inner-side open angle Ob are decided (step S12e). Specifically, based on the range of the outer-side open angle Oa, while the open angle difference ΔΘ is varied, torque and tensile stress (hereinafter, "stress") that is generated in the inner side center bridges 126 by centrifugal force are calculated, and an appropriate range of the outer-side open angle Θa and appropriate ranges of the open angle difference ΔΘ and the inner-side open angle Θb are decided. As a result, the shape of the rotor core 120 is decided. Here, the open angle difference L18 is a value equal to the outer-side open angle Θa from which the inner-side open angle Θb is subtracted.

Next, the production step S20 will be described. The production step S20 sequentially progresses as the production condition deciding step S10 progresses.

First, after the step S11 of deciding the basic specifications is performed in the production condition deciding step S10, the rotor shaft 110 is produced (step S21).

Next, after the step S 12a of deciding the permanent magnet specifications is performed in the production condition deciding step S10, material procurement in the production of the permanent magnets 130 (step S22) is performed (step S22a). Note that, in the case where the shape of the permanent magnets 130 is fixed and there is no change therein at this stage, a later-described step S22b of working the permanent magnets may be performed at this point in time. Alternatively, in the case where the shape of the permanent magnets 130 is finally adjusted by the end of the production condition deciding step S10 such as the case where there is no problem in a preparation period of the material of the permanent magnets 130 in consideration of the time limit of delivery, the step S22a and the step S22b of working the permanent magnets may both be performed at an appropriate time before the end of the production condition deciding step S10. The following describes, as an example, a case wherein the material of the permanent magnets 130 is procured in advance and the step S22b of working the permanent magnets is performed after the end of the production condition deciding step S10. That is, it describes a case where the shape of the permanent magnets 130 is finally adjusted based on the results of the decision of the outer-side open angle Θa and further the inner-side open angle Ob, by the end of the production condition deciding step S10.

Next, after up to S 12e of deciding the ranges of the open angle difference ΔΘ and the inner-side open angle Θb is performed in the production condition deciding step S10, the permanent magnet working (step S22b) in the step S22 of the production of the permanent magnets 130 is performed. Note that the production of the permanent magnets 130 (step S22) including the material procurement in the step S22a may be performed as is described above.

Further, after up to the step S12e is performed, the electromagnetic steel sheets 120a are produced by punching or the like (step S23). Next, the produced electromagnetic steel sheets 120a are laminated in the axial direction to be assembled into the rotor core 120 with the multilayer structure (step S24).

When the step S21, step S22, and step S24 are finished, they are assembled (step S25). Specifically, the rotor core 120 is attached to the rotor shaft 110, and the permanent magnets 130 are put in the accommodation holes of the rotor core 120. Next, other accessory members are attached to the assembly produced in the step S25 (step S26). Consequently, the assembling of the double-layer interior permanent-magnet rotor 100 is finished. Next, inspection after the assembling of the double-layer interior permanent-magnet rotor 100 is performed (step S27).

Next, the major steps in the production condition deciding step S10 will be described using examples.

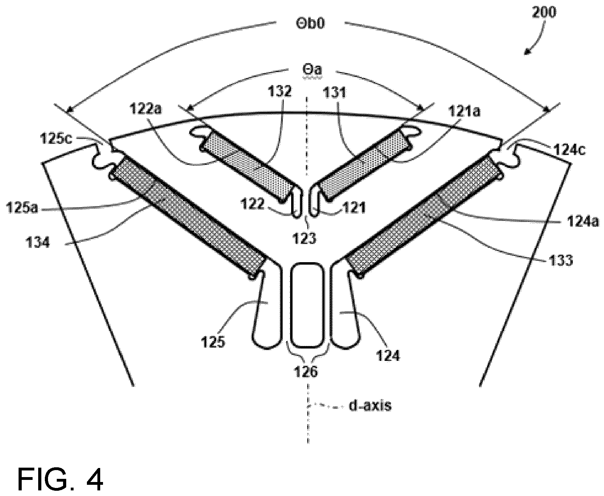

Fig. 4 is a partial transverse sectional view illustrating an example serving as a base for comparison with the double-layer interior permanent-magnet rotor 100 according to the embodiment, that is, illustrating a reference example 200.

In this reference example, the shapes and dimensions of the first outer side accommodation hole 121, the second outer side accommodation hole 122, the first inner side accommodation hole 124, and the second inner side accommodation hole 125 are those obtained as a result of the step S12b, and the outer-side open angle Θa is that obtained as a result of the step S12c. In the reference example 200, an open angle difference ΔΘ0 (= Θa - Θb0) may be set to a desired value, for example, 10 degrees.

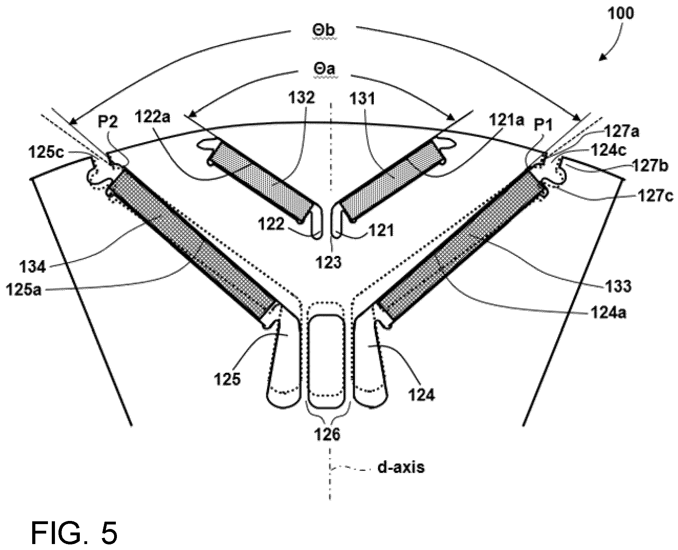

Fig. 5 is a partial transverse sectional view illustrating the double-layer interior permanent-magnet rotor 100 according to the embodiment.

The broken lines represent the inner side accommodation holes in the case of the reference example 200. The solid lines represent models that are targets of the decision of the range of the outer-side open angle Θa in the step S12d and the decision of the ranges of the open angle difference ΔΘ and the inner-side open angle Θb in the step S12e, in deciding the double-layer interior permanent-magnet rotor 100.

As for the decision of the range of the outer-side open angle Θa in the step S12d, it is set to 100 degrees to 140 degrees in the following example.

In the decision of the open angle difference ΔΘ in the step S12e, that is, the decision of the inner-side open angle Θb, an inclination of the first inner side accommodation hole radially outer side wall 124a is varied while the position of point P1 where a radially outermost part of the first inner side magnet 133 is in contact with the first inner side accommodation hole radially outer side wall 124a is fixed. Similarly, an inclination of the second inner side accommodation hole radially outer side wall 125a is varied while the position of point P2 where a radially outermost part of the second inner side magnet 134 is in contact with the second inner side accommodation hole radially outer side wall 125a is fixed. At this time, the first inner side magnet 133 and the second inner side magnet 134 are kept unchanged in length.

This method of varying the inner-side open angle Θb is intended to obtain a sufficient circumferential-direction interval between the magnetic poles 139 (Fig. 1). Therefore, this is only an example and is not restrictive. For example, tips of opening parts 124c, 125c may be fixed. Or, parts to be fixed may be partial parts of opening part chips 127a, opening part chips 127b, or magnet holding projections 127c. Further, the length of the first inner side magnet 133 and the second inner side magnet 134 may be adjusted.

The following shows the evaluation results in the step S12e of deciding the ranges of the open angle difference ΔΘ and the inner-side open angle Θb.

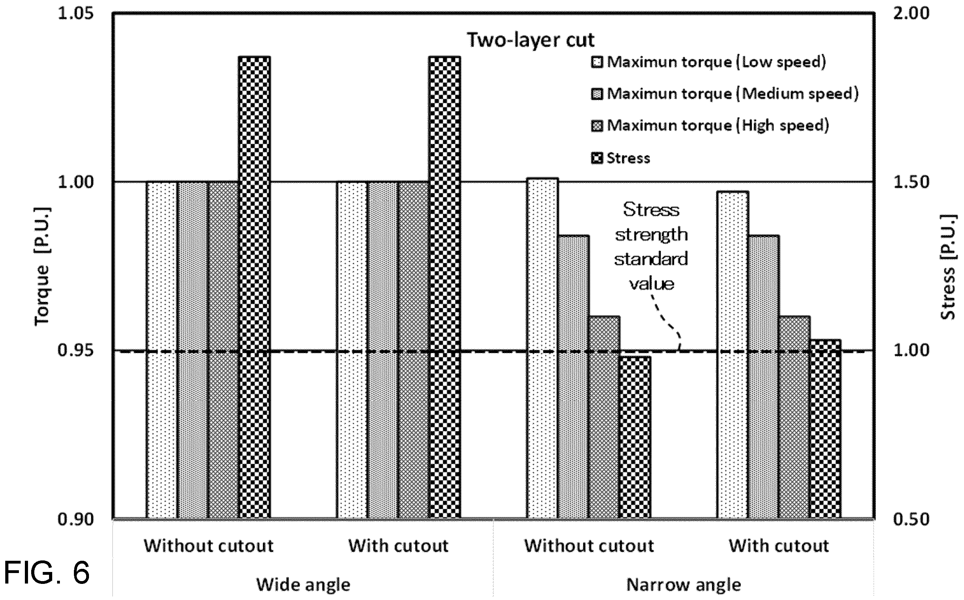

Fig. 6 is a graph illustrating torque and stress in a case of two-layer cut as a comparative example for explaining the effect of the double-layer interior permanent-magnet rotor 100 according to the embodiment.

Here, the case of the two-layer cut refers to a case where the inner side accommodation holes communicate with the outer side of the outer circumferential surface of the rotor core 120 without outer bridges present on the radially outer sides of the inner side accommodation holes, and in addition, the inner side accommodation holes communicate with the outer side of the outer circumferential surface of the rotor core 120 without outer bridges present on the radially outer sides of the outer sides accommodation holes.

In Fig. 6, the horizontal axis represents cases including cases where, though the inner-side open angle Θb is smaller than the outer-side open angle Θa, it is made to approach the outer-side open angle so as to be wide and it is made narrower, each of which cases are broken into cases where cutout for lightening is absent and present on the radially inner sides of the inner side accommodation holes. As for the vertical axis, the first axis represents torque and the second axis represents stress. Further, the bars represent the maximum torque at a low-speed time, the maximum torque at a medium-speed time, and the maximum torque at a high-speed time in the order from the paler representation toward the deeper representation. Further, the bar with the spotted white spaces at the right end in each case represents stress. Further, the stress is a value relative to a stress criterion.

In the case represented by "WIDE ANGLE" where the inner-side open angle Θb is wide, there is almost no influence of the presence/absence of the cutout. Further, in the case where the inner-side open angle Θb is widened, the stress is about 1.9 times the stress criterion value, which is not structurally valid.

In the case represented by "NARROW ANGLE" where the inner-side open angle Ob is narrowed, the stress reduces irrespective of the presence/absence of the cutout. Specifically, in the case without the cutout, it reduces to 0.98 times the stress criterion value. On the other hand, in the case with the cutout, it reduces to only 1.03 times the stress criterion value, which is not structurally valid.

Further, in the case where the inner-side open angle Θb is narrowed, in the case without the cutout, the maximum torque at the low-speed time slightly increases, but the maximum torques at the medium-speed time and at the high-speed time reduce by about 2% and about 4% respectively. Further, in the case with the cutout, the maximum torques at the low-speed time, the medium-speed time, and the high-speed time further reduce.

As described above, in the case of the two-layer cut as the comparative example, if the inner-side open angle is narrowed to reduce the stress to the criterion value or less, the torques, in particular, in the medium-speed range and the high-speed range reduce. Further, an attempt to form cutouts on more radially inner sides than the permanent magnets with the aim of lightening results in a torque reduction if cutout holes having a shape that does not influence the torque in the case of a wide open angle are applied to the case of a narrow open angle. Therefore, there is a problem of a difficulty in lightening.

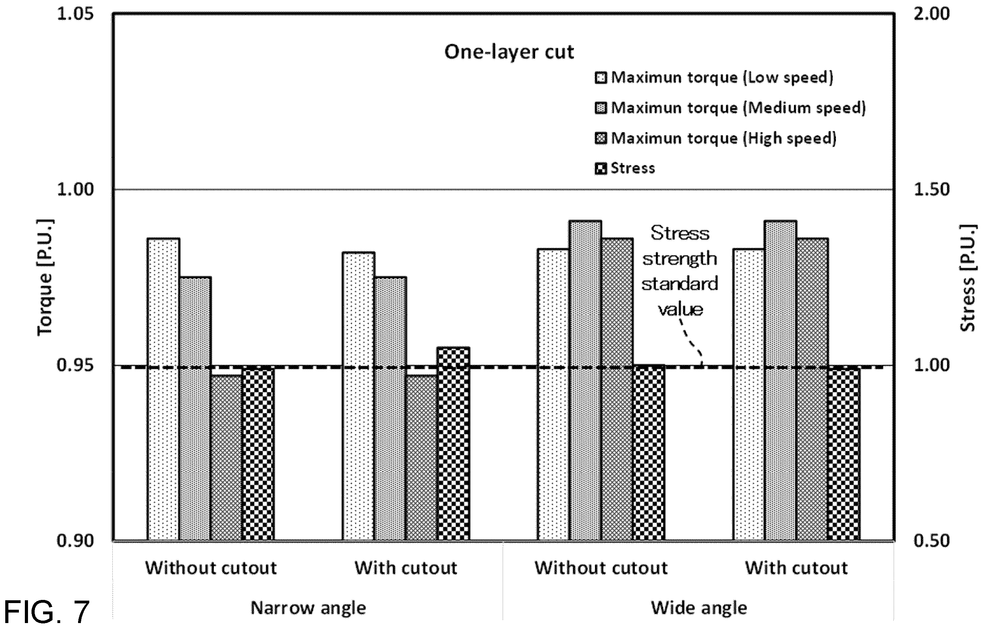

Fig. 7 is a graph illustrating torque and stress in the case of the one-layer cut according to the embodiment for explaining the effect of the double-layer interior permanent-magnet rotor 100 according to the embodiment. Here, the case of the one-layer cut refers to a case where only the inner side accommodation holes communicate with the outer side of the outer circumferential surface of the rotor core 120 without outer bridges on the radially outer sides of the inner side accommodation holes, and there are outer bridges on the radially outer sides of the outer side accommodation holes.

The horizontal axis and the vertical axis in Fig. 7 represent the same as in Fig. 6. Further, the bars also represent the same as in Fig. 6.

In Fig. 7, the case represented by "NARROW ANGLE" where the inner-side open angle $\Theta b$ is narrowed is a case that is different from the case represented by "NARROW ANGLE" in Fig. 6 only in the condition that the outer bridges are present on the radially outer sides of the outer side accommodation holes. This case also presents the same tendency as that in the case represented by "NARROW ANGLE" where the inner-side open angle $\Theta b$ is narrowed in Fig. 6.

That is, in the case represented by "NARROW ANGLE" in the one-layer cut, the stress is less than the stress criterion value in the case without the cutout, while it does not satisfy the stress criterion value in the case with the cutout. Further, in the case without the cutout, the maximum torques at the medium-speed time and the high-speed time reduce as compared with the maximum torque at the low-speed time. Further, in the case with the cutout, the maximum torques at the low-speed time and the medium-speed time further reduce. Narrowing the inner-side open angle to reduce the stress to the criterion value or less thus results in a reduction in the torques, in particular, in the medium-speed range and the high-speed range.

On the other hand, in the one-layer cut, in the case represented by "WIDE ANGLE" where the inner-side open angle $\Theta b$ is widened, the results are the same as in the case of the two-layer cut in that the maximum torques in the medium-speed range and the high-speed range increase by the same degree or more as the maximum torque in the low-speed range irrespective of the presence/absence of the cutout as illustrated in Fig. 7. On the other hand, as for the stress, the obtained result is such that, even in the case represented by "WIDE ANGLE" where the inner-side open angle $\Theta b$ is widened, the stress does not increase and the stress satisfies the stress criterion value irrespective of the presence/absence of the cutout in the case of the one-layer cut case unlike the case of the two-layer cut.

Further, widening the inner-side open angle $\Theta b$ leads to the widening of a radially inner side space of the inner side center bridges 126 (see Fig. 5). This as a result facilitates the formation of the cutout for lightening.

The above is the ground for employing the one-layer cut rather than the two-layer cut in the rotor core 120 in this embodiment, and the results are reflected in the step S12b of deciding the reference shapes of the accommodation holes.

Note that this method of reducing the inner-side open angle $\Theta b$ is intended to obtain a sufficient circumferential-direction interval between the magnetic poles 139 (Fig. 1) as described above. Therefore, this is only an example and is not restrictive. For example, the tips of the opening parts 124c, 125c may be fixed. Or, parts to be fixed may be partial parts of the opening part chips 127a, the opening part chips 127b, or the magnet holding projections 127c. Further, the length of the first inner side magnet 133 and the second inner side magnet 134 may be adjusted.

Next, the evaluation results in the step S12e of deciding the ranges of the open angle difference $\Delta\Theta$ and the inner-side open angle $\Theta b$ will be shown.

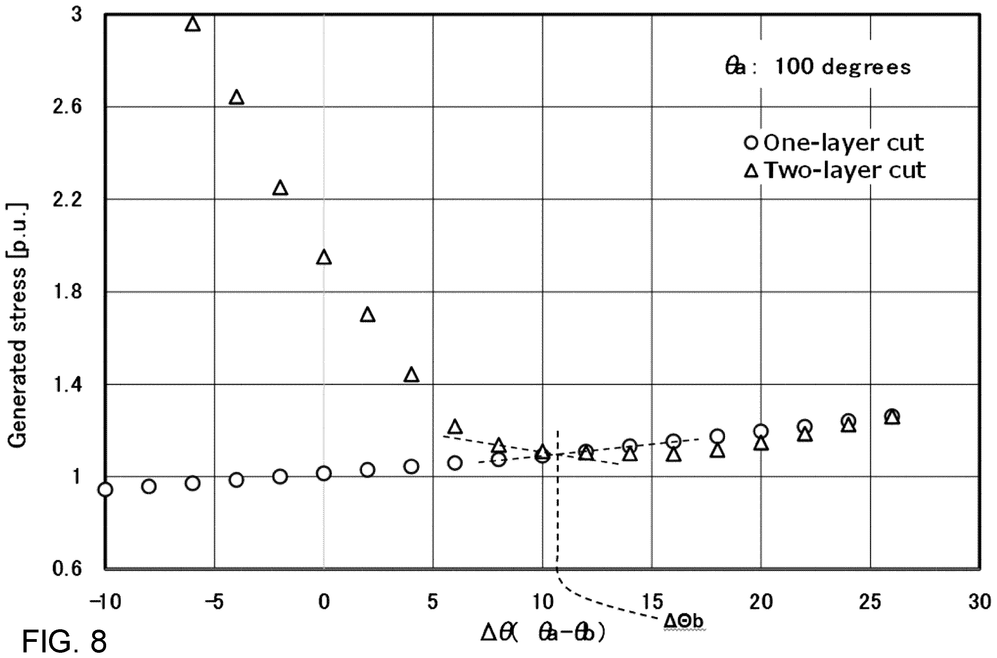

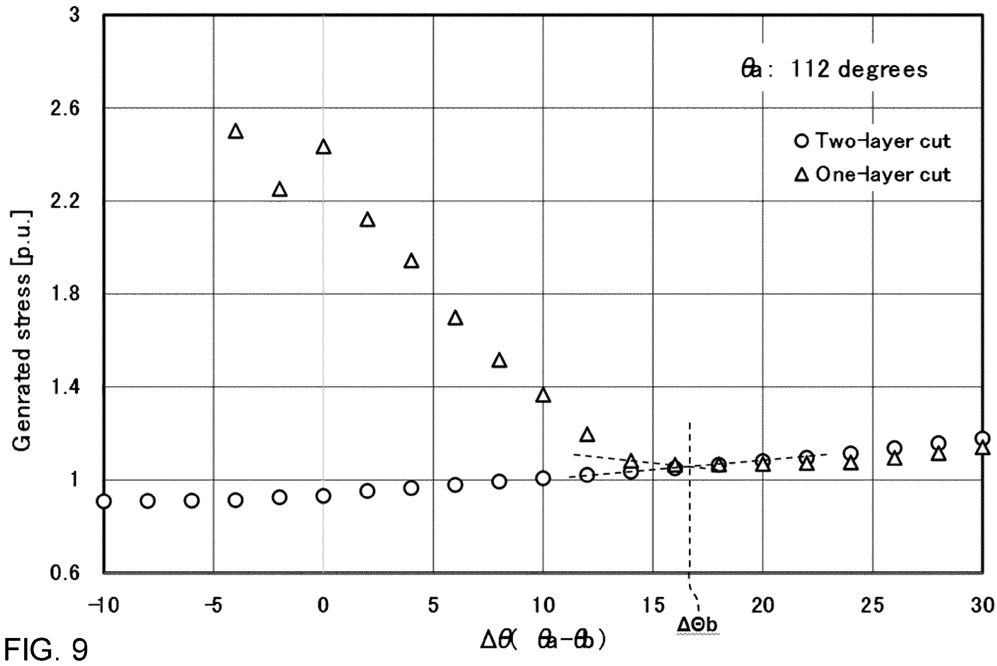

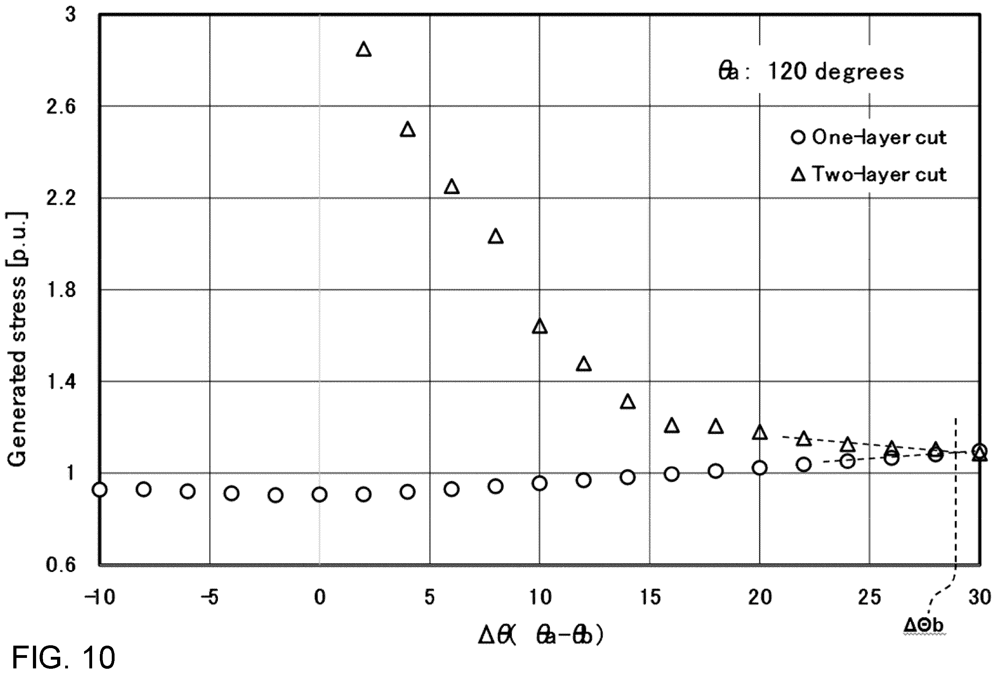

Fig. 8 is a first graph illustrating an influence of the angle difference between the open angles on generated stress in the double-layer interior permanent-magnet rotor 100 according to the embodiment. The horizontal axis represents the open angle difference $\Delta\Theta$, that is, a value equal to the outer-side open angle $\Theta a$ from which the inner-side open angle Ob is subtracted. The vertical axis represents generated stress, that is, stress (tensile stress) generated in the inner side center bridge 126 due to centrifugal force. This also applies to Fig. 9 and Fig. 10.

Fig. 8 is an example in a case where the outer-side open angle $\Theta a$ is 100 degrees. As illustrated in Fig. 8, in a region where the value of the open angle difference $\Delta\Theta$, that is, its positive absolute value is large (right side in Fig. 8), the generated stress is about equal in the case of the one-layer cut and in the case of the two-layer cut, or is slightly larger in the case of the one-layer cut. As the value of the open angle difference $\Delta\Theta$ decreases, that is, as the value of the inner-side open angle $\Theta b$ increases, the stress increases in the case of the two-layer cut, while the stress gradually decreases in the case of the one-layer cut.

A branch open angle difference $\Delta\Theta b$ which is a value of the open angle difference $\Delta\Theta$ at which, in terms of a decreasing direction of the value of the open angle difference $\Delta\Theta$, the tendency of the stress in the case of the one-layer cut branches from the tendency of the stress in the case of the two-layer cut is about 10.4 degrees on the graph. That is, in a region where the value of the open angle difference $\Delta\Theta$ is about 10 degrees or less, the generated stress is smaller in the case of the one-layer cut than in the case of the two-layer cut, and the effect of the one-layer cut is exhibited. In other words, setting the value of the inner-side open angle $\Theta b$ larger than ($\Theta a$-$\Delta\Theta$), that is, 90 (= 100 - 10) degrees produces the effect of the one-layer cut.

Fig. 9 is a second graph illustrating an influence of the angle difference between the open angles on generated stress in the double-layer interior permanent-magnet rotor 100 according to the embodiment.

Fig. 9 is an example in a case where the outer-side open angle $\Theta a$ is 112 degrees. The branch open angle difference $\Delta\Theta b$ in this case is about 17 degrees on the graph. That is, in a region where the value of the open angle difference $\Delta\Theta$ is about 17 degrees or less, the generated stress is smaller in the case of the one-layer cut than in the case of the two-layer cut, and the effect of the one-layer cut is exhibited. In other words, setting the value of the inner-side open angle $\Theta b$ larger than 95 (= 112 - 17) degrees produces the effect of the one-layer cut.

Fig. 10 is a third graph illustrating an influence of the angle difference between the open angles on generated stress in the double-layer interior permanent-magnet rotor 100 according to the embodiment.

Fig. 10 is an example in a case where the outer-side open angle $\Theta a$ is 120 degrees. The branch open angle difference $\Delta \Theta b$ in this case is about 29 degrees on the graph. That is, in a region where the value of the open angle difference $\Delta \Theta$ is about 29 degrees or less, the generated stress is smaller in the case of the one-layer cut than in the case of the two-layer cut, and the effect of the one-layer cut is exhibited. In other words, setting the value of the inner-side open angle $\Theta b$ larger than 91 (= 120 - 29) produces the effect of the one-layer cut.

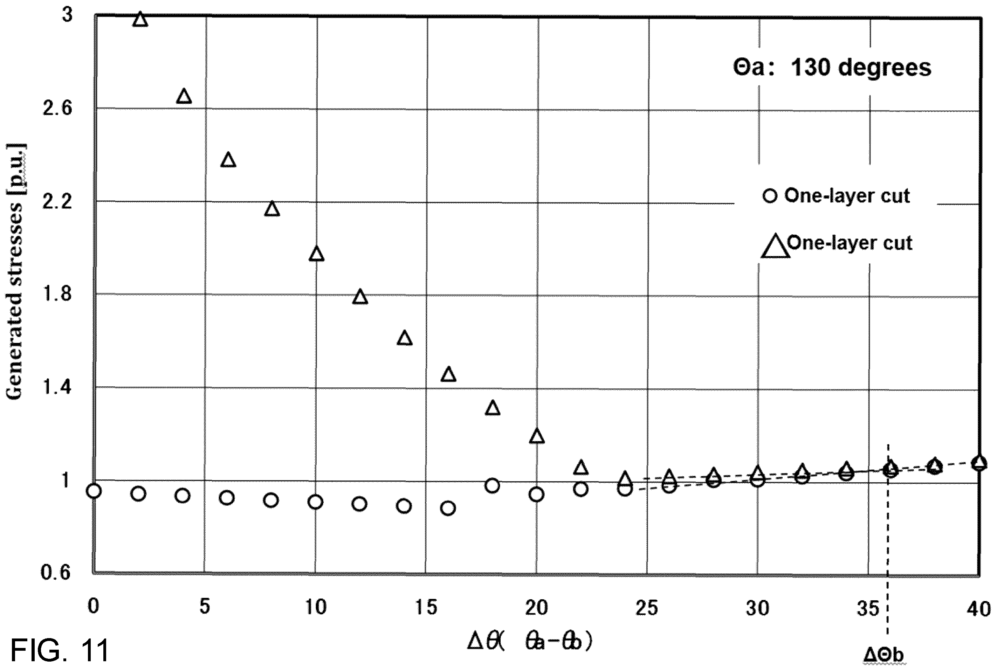

Fig. 11 is a fourth graph illustrating an influence of the angle difference between the open angles on generated stress in the double-layer interior permanent-magnet rotor 100 according to the embodiment.

Fig. 11 is an example in a case where the outer-side open angle $\Theta a$ is 130 degrees. The branch open angle difference $\Delta \Theta b$ in this case is about 36 degrees on the graph. That is, in a region where the value of the open angle difference $\Delta \Theta$ is about 36 degrees or less, the generated stress is smaller in the case of the one-layer cut than in the case of the two-layer cut, and the effect of the one-layer cut is exhibited. In other words, setting the value of the inner-side open angle $\Theta b$ larger than 94 (= 130 - 36) produces the effect of the one-layer cut.

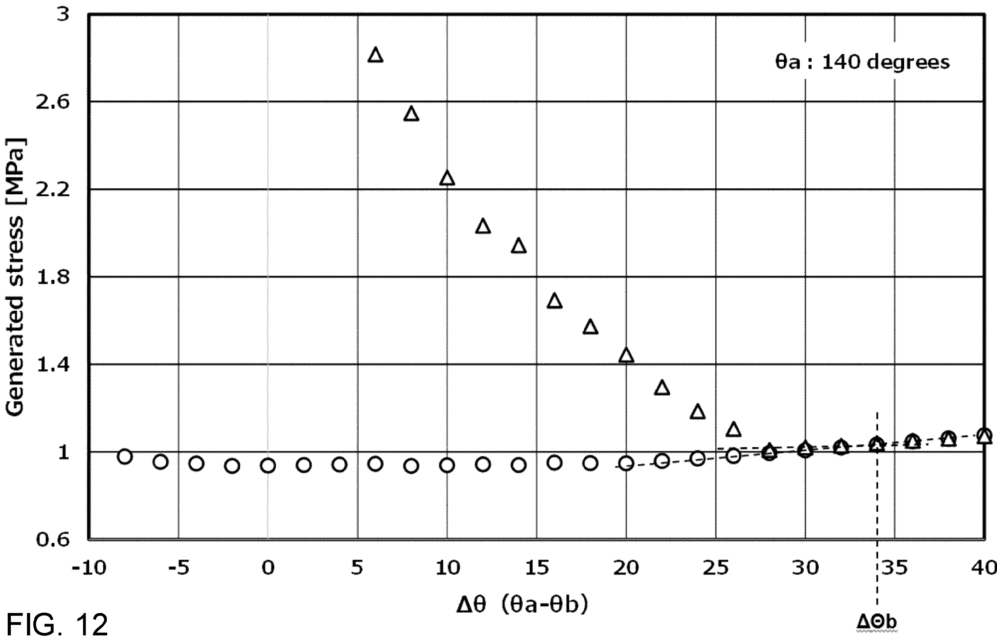

Fig. 12 is an example in a case where the outer-side open angle $\Theta a$ is 140 degrees. The branch open angle difference $\Delta \Theta b$ in this case is about 34 degrees on the graph. That is, in a region where the value of the open angle difference $\Delta \Theta$ is about 34 degrees or less, the generated stress is smaller in the case of the one-layer cut than in the case of the two-layer cut, and the effect of the one-layer cut is exhibited. In other words, setting the value of the inner-side open angle $\Theta b$ larger than 106 (= 140 - 34) produces the effect of the one-layer cut.

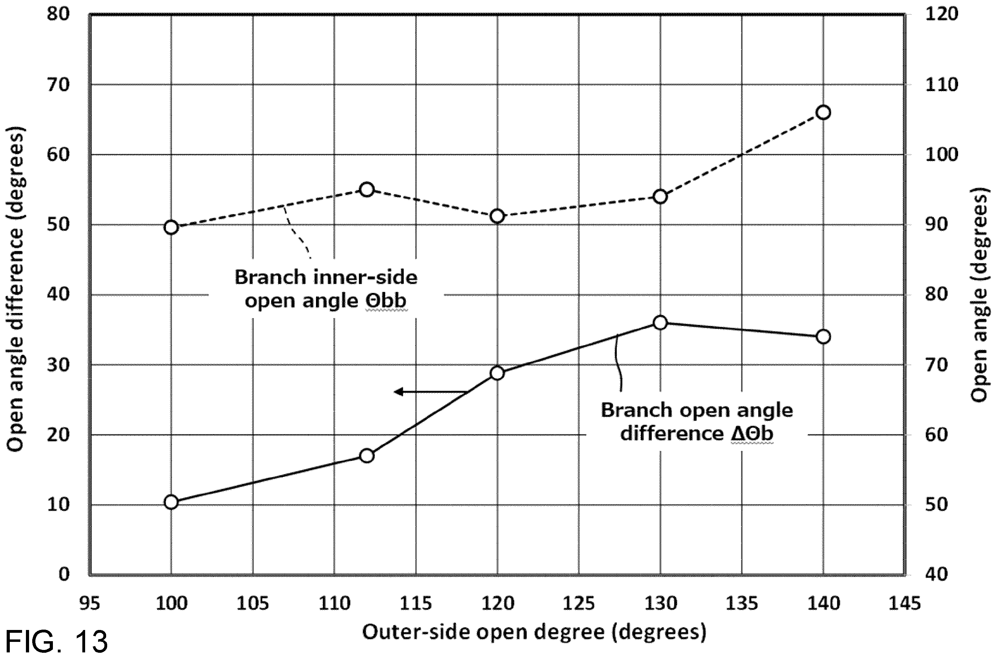

Fig. 13 is a graph illustrating a tendency regarding the open angles and the angle difference in the double-layer interior permanent-magnet rotor 100 according to the embodiment and is a summary of the results illustrated in Fig. 8 to Fig. 12. The horizontal axis represents the outer-side open angle $\Theta a$ (degree), and as for the vertical axis, the first axis represents the open angle difference $\Delta \Theta$ (degree) and the second axis represents the inner-side open angle (degree). The solid line represents the branch open angle difference $\Delta \Theta b$, and the broken line represents a branch inner-side open angle $\Theta bb$. That is, if the inner-side open angle $\Theta b$ is larger than the branch inner-side open angle $\Theta bb$ illustrated in Fig. 13, the generated stress is smaller in the case of the one-layer cut than in the case of the two-layer cut, and the effect of the one-layer cut is produced.

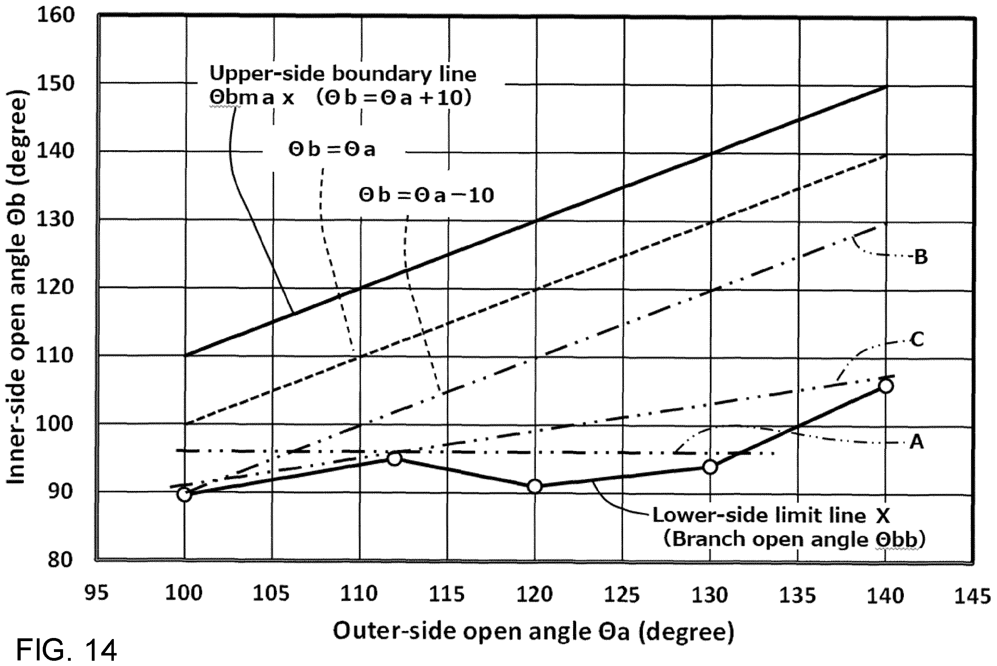

Fig. 14 is a graph illustrating an effective range of the inner-side open angle for the outer-side open angle in the double-layer interior permanent-magnet rotor according to this embodiment. The horizontal axis represents the outer-side open angle $\Theta a$ (degree), and the vertical axis represents the inner-side open angle $\Theta b$ (degree).

First, an upper limit value $\Theta bmax$ of the effective range of the inner-side open angle $\Theta b$ will be described. As is apparent from Fig. 8 to Fig. 12, as the minus-side absolute value of the open angle difference $\Delta \Theta$ is larger, the degree by which the generated stress is smaller in the case of the one-layer cut than in the case of the two-layer cut monotonously increases. Here, in the case where the open angle difference $\Delta \Theta$ is minus 10 degrees which is the minimum value on the horizontal axes illustrated in Fig. 8 to Fig. 12, the upper limit value of the inner-side open angle $\Theta b$ is (the outer-side open angle $\Theta a$ plus 10 degrees). For example, in the case where the outer-side open angle $\Theta a$ is 100 degrees, the upper limit value of the inner-side open angle $\Theta b$ is 110 degrees, and in the case where the outer-side open angle $\Theta a$ is 140 degrees, the upper limit value of the inner-side open angle $\Theta b$ is 150 degrees.

Incidentally, if the inner-side open angle $\Theta b$ becomes still larger than the outer-side open angle $\Theta a$ plus 10 degrees, a difference of the amount of iron of the first outer side magnet 131 and the second outer side magnet 132 from that of the first inner side magnet 133 and the second inner side magnet 134 reduces to decrease reluctance torque, producing a minus effect. Therefore, $\Theta bmax$ that is set such that the inner-side open angle $\Theta b$ becomes the outer-side open angle $\Theta a$ plus 10 degrees is set as an upper-side boundary line, which is represented by the thick line in Fig. 14.

Next, the branch open angle $\Theta bb$ illustrated in Fig. 13 is set as a lower-side limit line X, which is represented by the thick line in Fig. 14.

As described above, if an angle range from 100 degrees to 140 degrees is selected as the region of the outer-side open angle $\Theta a$, in this region of the outer-side open angle $\Theta a$, a region where the inner-side open angle $\Theta b$ is larger than the branch open angle $\Theta bb$ represented by the thick line as the lower limit line X and is equal to or lower than the value of the straight line of $\Theta max$ represented by the thick line as the upper-side boundary line is an effective region where the effect of the one-layer cut is produced.

Here, using the lower-side limit line X in a sequential line form illustrated in Fig. 14 as the lower-side boundary is not practical, and thus using a straight boundary line is effective. From such a viewpoint, a new lower-side boundary line is set, and a region equal to or more than the value of this lower-side boundary line and equal to or less than the value of the aforesaid upper-side boundary line ($\Theta bmax$-based) is set as an effective region where the effect of the one-layer cut is produced. As such a new lower-side boundary line, straight line A, straight line B, and straight line C are shown in Fig. 14.

The straight line A is a straight line having a constant value. As illustrated in Fig. 13, in a range where the outer-side open angle $\Theta a$ is 100 degrees to 130 degrees, the branch inner-side open angle Θbb is 90 to 95 degrees. Therefore, the outer-side open angle Θa is set to fall within a range from 100 degrees to 130 degrees, and the lower-side limit line X is commonly set to 96 degrees (> 95).

The straight line B is a straight line corresponding to Θb = Θa - 10 (degree). Obb when Θa is 100 degrees is 89.6 degrees, and the value of the straight line A is 90 degrees. Therefore, the straight line A is above the lower-side limit line X in Fig. 14. In this case, the inner-side open angle Θb is the outer-side open angle Θa±10 degrees, and the inner-side open angle Θb is specified as falling in a range close to the outer-side open angle Θa.

The straight line C is a straight line that is a straight line resulting from the upward movement of a straight line enveloping the lower-side limit line X. Specifically, in Fig. 14, a straight line (Θb = 0.393 Θa + 51.0) connecting the value of the lower-side limit line X when the outer-side open angle Θa is 112 degrees and the value of the lower-side limit line X when the outer-side open angle Θa is 140 degrees is moved upward so as to have an allowance, and the straight line C is given by the following formula (1), for instance.

$$\Theta b = 0.393 \Theta a \cdot x + 52.0 \quad \dots (1)$$

As described above, in the double-layer interior permanent-magnet rotor 100 having the configuration in which the two layers each composed of the two magnets making a pair are arranged in each magnetic pole, by employing the one-layer cut where the opening parts 124c, 125c are provided only in the accommodation holes of the inner side layer, deciding the range of the outer-side open angle Θa, and deciding the ranges of the open angle difference ΔΘ and the inner-side open angle Ob, it is possible to produce a double-layer interior permanent-magnet rotor that can keep both torque performance and structural strength.

It should be noted that the above only presents an example, and the conditions such as the shapes, dimensions, and positions of the accommodation holes of the permanent magnets and the circumferential-width of the magnetic pole 139 may be appropriately selected and decided according to the above-described procedure.

According to the embodiment described hitherto, it is possible to keep both torque performance and strength by employing the one-layer cut in the configuration where the two layers each composed of the two magnets making a pair are arranged in each magnetic pole.

[Other Embodiments]

While certain embodiments have been described, these embodiments have been presented by way of example only, and are not intended to limit the scope of the inventions. Further, the features of the embodiments may be combined. Further, the embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

EXPLANATION OF REFERENCE SIGNS

1... double-layer interior permanent-magnet rotary electric machine, 10...stator, 11... stator core, 12... stator winding, 20... bearing, 30...bearing bracket, 40...frame, 100... double-layer interior permanent-magnet rotor, 110...rotor shaft, 120...rotor core, 120a...electromagnetic steel sheet, 121...first outer side accommodation hole, 121a...first outer side accommodation hole radially outer side wall, 121b...first outer side accommodation hole circumferential-direction outer side wall, 122...second outer side accommodation hole, 122a...second outer side accommodation hole radially outer side wall, 122b...first outer side accommodation hole circumferential-direction outer side wall, 123...outer side center bridge, 124...first inner side accommodation hole, 124a...first inner side accommodation hole radially outer side wall, 124b...first inner side accommodation hole circumferential-direction inner side wall, 124c...opening part, 125...second inner side accommodation hole, 125a...second inner side accommodation hole radially outer side wall, 125b...first inner side accommodation hole circumferential-direction inner side wall, 125c...opening part, 126...inner side center bridge, 127a, 127b...opening part chip, 127c...magnet holding projection, 130...permanent magnet, 131...first outer side magnet, 132...second outer side magnet, 133...first inner side magnet, 134...second inner side magnet, 139...magnetic pole, 200...reference example

**Claims**

1. A double-layer interior permanent-magnet rotor comprising:

    a rotor shaft extending in a rotation axis direction;
    a rotor core attached to the rotor shaft and having magnetic poles each of which has a first outer side accommodation hole and a second outer side accommodation hole which are formed to make a pair on a radially outer side, and has a first inner side accommodation hole and a second inner side accommodation hole which are formed to make a pair on more radially inner sides than the first outer side accommodation hole and the second outer side accommodation hole;
a first outer side magnet and a second outer side magnet which are accommodated in the first outer side accommodation hole and the second outer side accommodation hole respectively; and
a first inner side magnet and a second inner side magnet which are accommodated in the first inner side accommodation hole and the second inner side accommodation hole respectively,
wherein the first outer side accommodation hole and the second outer side accommodation hole do not in communicate with an outer side of an outer circumference of the rotor core,
wherein the first inner side accommodation hole and the second inner side accommodation hole have opening parts communicating with the outer side of the outer circumference of the rotor core, and
wherein a value of an inner-side open angle at which a first inner side accommodation hole radially outer side wall of the first inner side accommodation hole and a second inner side accommodation hole radially outer side wall of the second inner side accommodation hole open toward a radially outer side is equal to or higher than a prescribed value and is equal to or lower than a value of an outer-side open angle to which ten degrees are added, the outer-side open angle being an angle at which a first outer side accommodation hole radially outer side wall of the first outer side accommodation hole and a second outer side accommodation hole radially outer side wall of the second outer side accommodation hole open toward the radially outer side.

2. The double-layer interior permanent-magnet rotor according to claim 1,

   wherein the outer-side open angle is equal to or more than 100 degrees and equal to or less than 130 degrees, and
   wherein the prescribed value of the inner-side open angle is 96 degrees.

3. The double-layer interior permanent-magnet rotor according to claim 1,

   wherein the outer-side open angle is equal to or more than 100 degrees and equal to or less than 140 degrees, and
   wherein the prescribed value of the inner-side open angle is a value equal to the value of the outer-side open angle from which 10 degrees is subtracted.

4. The double-layer interior permanent-magnet rotor according to claim 1,

   wherein the outer-side open angle is equal to or more than 100 degrees and equal to or less than 140 degrees, and
   wherein the prescribed value of the inner-side open angle is a value obtained by multiplying the value of the outer-side open angle by 0.393.and then adding 51.0 to the multiplication result.

5. The double-layer interior permanent-magnet rotor according to claim 1,

   wherein one bridge part separating the first outer side accommodation hole and the second outer side accommodation hole in a circumferential direction is present, and
   wherein two bridge parts separating the first inner side accommodation hole and the second inner side accommodation hole in the circumferential direction are present.

6. A double-layer interior permanent-magnet rotary electric machine comprising:

   the double-layer interior permanent-magnet rotor according to any one of claim 1 to claim 3;
   a stator having a cylindrical stator core arranged on a radially outer side of the rotor core and a stator winding wound around the stator core;
   two bearings supporting two ends, in terms of the rotation axis direction, of the rotor shaft in a rotatable manner;
   two bearing brackets supporting the two bearings respectively in a static manner; and
   a frame arranged to cover a radially outer side of the stator to support the two bearing brackets.

7. A method for manufacturing a double-layer interior permanent-magnet rotor that includes: a rotor shaft; a rotor core attached to the rotor shaft and having magnetic poles each of which has a first outer side accommodation hole and a second outer side accommodation hole which are formed to make a pair on a radially outer side and on whose radially outer sides, openings are not formed, and has a first inner side accommodation hole and a second inner side accommodation hole which are formed to make a pair on more radially inner sides than the first outer side accommodation hole and the second outer side accommodation hole and on whose radially outer sides, openings are formed respectively; a first outer side magnet and a second outer side magnet which are accommodated in the first outer side accommodation hole and the second outer side accommodation hole respectively; and a first inner side magnet and a second inner side magnet which are accommodated in the first inner side accommodation hole and the second inner side accommodation hole respectively,
the method comprising:

a step of deciding a basic specification of the double-layer interior permanent-magnet rotor;
a step of producing the rotor shaft based on the basic specification;
a step of deciding permanent magnet specifications of the first outer side magnet, the second outer side magnet, the first inner side magnet, and the second inner side magnet respectively based on the basic specification;
a step of deciding accommodation hole reference shapes of the first outer side accommodation hole, the second outer side accommodation hole, the first inner side accommodation hole, and the second inner side accommodation hole respectively;
a step of deciding a value of an outer-side open angle at which a first outer side accommodation hole radially outer side wall of the first outer side accommodation hole and a second outer side accommodation hole radially outer side wall of the second outer side accommodation hole open toward the radially outer side;
a step of deriving, from the value of the outer-side open angle, an inner-side open angle effective for reducing stress as compared with a comparison target example where openings are formed on radially outer sides of the first outer side accommodation hole and the second outer side accommodation hole, the inner-side open angle being an angle at which a first inner side accommodation hole radially outer side wall of the first inner side accommodation hole and a second inner side accommodation hole radially outer side wall of the second inner side accommodation hole open toward the radially outer side;
a step of producing the first outer side magnet, the second outer side magnet, the first inner side magnet, and the second inner side magnet based on the permanent magnet specifications;
a step of producing a plurality of electromagnetic steel sheets based on the accommodation hole reference shapes, the outer-side open angle, and the inner-side open angle;
a step of assembling the plurality of electromagnetic steel sheets into a multilayer structure; and
a step of assembling the rotor shaft, the multilayer structure, the first outer side magnet, the second outer side magnet, the first inner side magnet, and the second inner side magnet.

FIG. 1

FIG. 2

**FIG. 3**

S10 — Production condition deciding step

S11 — Deciding entire specification of rotor

S12 — Deciding specifications of permanent magnets and rotor core, punching shape of electromagnetic steel sheets

S12a — Deciding specification of permanent magnet

S12b — Deciding reference shape of housing hole

S12c — Deciding outer-side open angle $\Theta_a$

S12d — Deciding range of outer-side open angle $\Theta_a$

S12e — Deciding range of open angle difference $\Delta\Theta$ and inner-side open angle $\Theta_b$

S20 — Production step

S21 — Producing rotor shaft

S22 — Producing permanent magnet

S22a — Procuring materials

S22b — Working permanent magnet

S23 — Producing electromagnetic steel sheets

S24 — Assembling into multilayer structure

S25 — Assembling

S26 — Attaching accessory members

S27 — Inspection after assembling double-layer interior permanent-magnet rotor

FIG. 4

FIG. 5

FIG. 6

FIG. 7

EP 4 614 766 A1

FIG. 8

EP 4 614 766 A1

FIG. 9

FIG. 10

FIG. 11

FIG. 12

FIG. 13

FIG. 14

EP 4 614 766 A1

## INTERNATIONAL SEARCH REPORT

| International application No. |
| --- |
| **PCT/JP2022/041177** |

**A.    CLASSIFICATION OF SUBJECT MATTER**

*H02K 1/274*(2022.01)i; *H02K 15/02*(2006.01)i
FI:    H02K1/274; H02K15/02 K

According to International Patent Classification (IPC) or to both national classification and IPC

**B.    FIELDS SEARCHED**

Minimum documentation searched (classification system followed by classification symbols)

H02K1/274; H02K15/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 6848135 B1 (TOSHIBA CORP.) 24 March 2021 (2021-03-24) paragraphs 4, 7-11, 18-21, fig. 3 | 1-7 |
| Y | JP 2015-73417 A (TOYOTA INDUSTRIES CORP.) 16 April 2015 (2015-04-16) paragraphs 7, 14-24, fig. 1, 2 | 1-7 |

☐ Further documents are listed in the continuation of Box C.      ☑ See patent family annex.

| | |
| --- | --- |
| *    Special categories of cited documents: <br> "A"    document defining the general state of the art which is not considered to be of particular relevance <br> "E"    earlier application or patent but published on or after the international filing date <br> "L"    document which may throw doubts on priority claim(s) or which is cited to establish the publication date of another citation or other special reason (as specified) <br> "O"    document referring to an oral disclosure, use, exhibition or other means <br> "P"    document published prior to the international filing date but later than the priority date claimed | "T"    later document published after the international filing date or priority date and not in conflict with the application but cited to understand the principle or theory underlying the invention <br> "X"    document of particular relevance; the claimed invention cannot be considered novel or cannot be considered to involve an inventive step when the document is taken alone <br> "Y"    document of particular relevance; the claimed invention cannot be considered to involve an inventive step when the document is combined with one or more other such documents, such combination being obvious to a person skilled in the art <br> "&"    document member of the same patent family |

| Date of the actual completion of the international search | Date of mailing of the international search report |
| --- | --- |
| **16 December 2022** | **10 January 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/041177**

| Patent document cited in search report | Publication date (day/month/year) | Patent family member(s) | Publication date (day/month/year) |
|---|---|---|---|
| JP      6848135     B1 | 24 March 2021 | (Family: none) | |
| JP      2015-73417     A | 16 April 2015 | (Family: none) | |

Form PCT/ISA/210 (patent family annex) (January 2015)

**EP 4 614 766 A1**

## REFERENCES CITED IN THE DESCRIPTION

**Patent documents cited in the description**

- JP 2020014322 A